# EUROPÄISCHE PATENTANMELDUNG

(11) **EP 4 417 394 A1**
(43) Veröffentlichungstag der Anmeldung: **21.08.2024**
(21) Anmeldenummer: 23157392.4
(22) Anmeldetag: 17.02.2023
(51) Int. Cl.: B29C 48/25, B29C 48/68, B29C 48/82

(54) **INLINER FÜR EINEN EXTRUDER**

(71) Anmelder: Bühler AG, 9240 Uzwil (CH)
(72) Erfinder: ROHRER, Patrick, 8444 Henggart (CH); TARTAGLIA, Miguel, 9032 Engelburg (CH)
(74) Vertreter: Hepp Wenger Ryffel AG

(57) **Zusammenfassung**

Die vorliegende Erfindung betrifft einen Inliner (1) für einen Extruder (13), umfassend ein Innenteil (2) mit einer axial durch das Innenteil (2) führenden Prozesszone (3), sowie eine das Innenteil (2) vollständig umfänglich umgebende Dichthülse (4), dadurch gekennzeichnet, dass das Innenteil (2) mindestens einen Kühlkanal (8) aufweist. Die vorliegende Erfindung betrifft weiterhin ein Barrel (9) für einen Extruder (13), umfassend ein Aussengehäuse (9a) und eine Durchgangsbohrung (12), dadurch gekennzeichnet, dass in der Durchgangsbohrung (12) ein erfindungsgemässer Inliner (1) angeordnet ist, sowie einen Extruder (13), umfassend mindestens ein derartiges Barrel (9).

## Beschreibung

Die vorliegende Erfindung betrifft einen Inliner für einen Extruder, wobei der Inliner austauschbar ist und mindestens einen Kühlkanal aufweist.

Extruder sind Maschinen, in denen Materialien wie Polymere, Elastomere oder proteinhaltige Mischungen für die Herstellung von Lebensmitteln einschliesslich Cerealien, Snacks, Tierfutter und alternativer Nahrungsmittel unter gewünschten Druck- und Temperaturbedingungen behandelt werden können. Ein typischer Extruder umfasst mindestens eine Extruderschneckenwelle, wobei jede der Extruderschneckenwellen einen Satz von Extruderschneckenelementen aufweist, die auf der Welle montiert sind. Die Extruderschneckenwellen sind in einem Zylinder untergebracht, welcher als Barrel bezeichnet wird. Ein Extruder umfasst üblicherweise mehrere Barrels, die Ende an Ende miteinander verbunden sind. Mehrere Barrels sind erforderlich, um die verschiedenen in dem Extruder durchzuführenden Prozesse wie Fördern, Kneten, Mischen, Entgasen, Dosieren und dergleichen auszuführen.

Jedes Barrel umfasst ein als Inliner bezeichnetes Einsatzelement, welches in das Barrelgehäuse gepresst wird. Im Barrelgehäuse sind weiterhin Kanäle für ein Medium vorgesehen, um die Temperatur im Barrel innerhalb eines gewünschten Bereichs zu regulieren. Das in den Kanälen geführte Medium kann durch Temperiervorrichtungen wie Wärmetauscher auf eine gewünschte Temperatur gebracht werden.

Die Inliner umfassen eine Prozesszone in Form einer axialen Bohrung, in welcher mindestens eine Extruderschneckenwelle angeordnet ist und in welcher die gewünschte Behandlung des zu extrudierenden Materials erfolgt. Da während der Extrusion die Extruderschneckenwelle innerhalb der Prozesszone rotiert und hierbei mit der Oberfläche der Prozesszone der Inliner in Berührung gerät, kommt es im Lauf der Zeit zu einem Verschleiss der Inliner.

Um einen ordnungsgemäßen Extrusionsprozess zu gewährleisten, müssen die Inliner daher nach einer gewissen Zeit ausgetauscht werden. Da die Inliner wie vorstehend ausgeführt üblicherweise in die Barrelgehäuse gepresst sind, ist das Auswechseln eines Inliners bei herkömmlichen Barrels ein mühsamer Prozess. Typischerweise erfolgt das Einpressen des Inliners durch ein Einschrumpfen des Inliners in das Barrelgehäuse, was zu einer derart festen Anordnung des Inliners im Barrelgehäuse führt, dass bei Verschleiss das gesamte System aus Inliner und Barrelgehäuse ausgetauscht werden muss. Dies ist offensichtlich nachteilig.

Es wurde beispielsweise in der US 2011/0063939 A1 vorgeschlagen, einen Extruder bereitzustellen, bei welchem Inliner austauschbar in den Barrels angeordnet sind. Die vorgeschlagene Lösung umfasst ein aus zwei Teilen bestehendes Barrel, welche voneinander gelöst werden können, um einen im Barrel angeordneten Inliner austauschen zu können.

Diese Lösung ist immer noch nicht optimal. Einerseits sind besondere zweiteilige Barrels erforderlich. Andererseits ist die Temperaturregelung innerhalb des Barrels nicht optimal. Während der Extrusion entsteht in der Prozesszone der Inliner Wärme, welche abgeführt werden muss. Die in den Barrels bereitgestellten Kühlkanäle sind von den austauschbaren Inlinern beabstandet und kühlen die Prozesszone der Inliner nur indirekt.

Es war die Aufgabe der vorliegenden Erfindung, einen Inliner für einen Extruder bereitzustellen, welcher die Nachteile des Stands der Technik überwindet und insbesondere neben einer erleichterten Austauschbarkeit eine erhöhte Temperiereffizienz aufweist. Die Aufgabe wird durch einen Inliner gemäss der vorliegenden Erfindung gelöst.

Im Detail betrifft die vorliegende Erfindung einen Inliner für einen Extruder, umfassend ein Innenteil mit einer axial durch das Innenteil führenden Prozesszone, sowie eine das Innenteil vollständig umfänglich umgebende Dichthülse, dadurch gekennzeichnet, dass das Innenteil mindestens einen Kühlkanal aufweist.

Der erfindungsgemässe Inliner ist zweiteilig aufgebaut. Der erfindungsgemässe Inliner umfasst eine Dichthülse und ein in der Dichthülse angeordnetes Innenteil.

Die Dichthülse ist vorzugsweise von äusserer zylindrischer Form und so ausgestaltet, dass sie in einer vorzugsweise zylindrischen Durchgangsbohrung eines Barrels eines Extruders angeordnet und aus dieser wieder entnommen werden kann. Dies kann dadurch erreicht werden, dass der Aussendurchmesser der Dichthülse geringfügig (vorzugsweise 0,01 bis 0,5%) kleiner ist als der Durchmesser der Durchgangsbohrung des Barrels und somit die Dichthülse etwas "Spiel" in der Durchgangsbohrung des Barrels hat.

Die Dichthülse ist aus einem Material gefertigt, welches herkömmlich für Inliner von Extrudern verwendet wird. Vorzugsweise ist die Dichthülse aus einem Metall oder einer Metall-Legierung gefertigt. Beispielsweise seien Eisen, Stahl oder Legierungen genannt, welche Aluminium, Chrom, Molybdän oder Kombinationen dieser Metalle enthalten.

Die Dichthülse umgibt das bevorzugt zylindrische Innenteil des erfindungsgemässen Inliners vollständig umfänglich, so dass das Innenteil nicht mit dem Gehäuse des Barrels in Kontakt kommt.

Gemäss einer bevorzugten Ausführungsform der vorliegenden Erfindung ist die Dichthülse fest auf dem Innenteil aufgebracht. Innenteil und Dichthülse können bei dieser Ausführungsform nicht separat voneinander ausgetauscht werden, sondern bilden eine untrennbare Einheit.

Das Innenteil ist ebenfalls aus einem Material gefertigt, welches herkömmlich für Inliner von Extrudern verwendet wird. Vorzugsweise ist das Innenteil aus einem Metall oder einer Metall-Legierung gefertigt. Beispielsweise seien Eisen, Stahl oder Legierungen genannt, welche Aluminium, Chrom, Molybdän oder Kombinationen dieser Metalle enthalten.

Die Verbindung zwischen Dichthülse und Innenteil kann auf herkömmliche Weise hergestellt werden. Gemäss einer bevorzugten Ausführungsform sind die Dichthülse und das Innenteil Gussteile und ist die Dichthülse auf das Innenteil aufgeschrumpft und optional aufgelötet oder geschweisst.

Das Innenteil umfasst eine axial durch das Innenteil führende Prozesszone, in Form einer durchgehenden Bohrung, in welcher mindestens eine Extruderschnecke angeordnet ist. Gemäss einer bevorzugten Ausführungsform ist die Prozesszone ausgewählt aus der Gruppe bestehend aus einer zylindrischen Prozesszone und zwei teilweise überlappenden zylindrischen Prozesszonen. Dies entspricht dem Design eines Einwellenextruders beziehungsweise eines Zweiwellenextruders. Die vorliegende Erfindung ist aber nicht auf diese Varianten eingeschränkt, sondern kann auch in Mehrwellenextrudern mit mehr als zwei Extruderschnecken Anwendung finden.

Durch die Ausgestaltung des erfindungsgemässen Inliners ist es auf einfache Weise möglich, im Innenteil des erfindungsgemässen Inliners mindestens einen Kühlkanal anzuordnen. Da das Innenteil vorzugsweise separat von der Dichthülse gefertigt wird, kann der mindestens eine Kühlkanal im Innenteil bereitgestellt werden, bevor die Dichthülse auf das Innenteil aufgebracht wird. Gemäss einer bevorzugten Ausführungsform können mehr als ein Kühlkanal, beispielsweise 2 bis 10 Kühlkanäle, im Innenteil bereitgestellt werden. Diese Kühlkanäle können miteinander verbunden sein oder Überschneidungen aufweisen. Erfindungsgemäss bevorzugt weist jeder Kühlkanal einen Durchmesser im Bereich von 5 bis 20 mm, bevorzugter 8 bis 12 mm auf.

Gegenüber dem Stand der Technik ist der mindestens eine Kühlkanal näher an der Prozesszone des Inliners angeordnet, da er wie vorstehend ausgeführt direkt im Innenteil des Inliners (und nicht wie im Stand der Technik im Barrelgehäuse) bereitgestellt ist. Dies führt zu einer deutlichen Verbesserung der Temperiereffizienz.

Der mindestens eine Kühlkanal kann eine Bohrung oder Nut sein, welche sich axial durch das oder aussen am Innenteil erstreckt und parallel zur Prozesszone angeordnet ist.

Gemäss einer bevorzugten erfindungsgemässen Ausführungsform ist der mindestens eine Kühlkanal in oder an der Oberfläche des Innenteils angeordnet. Besonders bevorzugt ist der mindestens eine Kühlkanal in Form einer Kühlspirale in der Oberfläche des Innenteils angeordnet. Diese Ausführungsform ist besonders vorteilhaft in der Herstellung. Vorzugsweise wird der mindestens eine Kühlkanal als Kühlkanalteil in der Oberfläche des Innenteils bereitgestellt, besonders bevorzugt als nach aussen offene Rinne. Der mindestens eine Kühlkanalteil wird während der Herstellung des Innenteils erzeugt, beispielsweise durch Giessen des Innenteils in einer Gussform, welche entsprechende Kühlkanalteile in der Oberfläche des Innenteils erzeugt. Der mindestens eine Kühlkanalteil in der Oberfläche des Innenteils wird anschliessend durch das vorstehend beschriebene Aufbringen der Dichthülse auf das Innenteil nach aussen hin verschlossen und bildet den vollständigen Kühlkanal.

Der erfindungsgemässe Inliner weist vorzugsweise Elemente auf, mit denen erfindungsgemässe Inliner stirnseitig miteinander verbunden werden können. Hierzu können beispielsweise an den beiden Enden des Innenteils und/oder der Dichthülse, vorzugsweise des Innenteils, Positionierbohrungen bereitgestellt sein, in denen Befestigungselemente wie Schrauben oder Stifte angeordnet werden können. Vorzugsweise weist das Innenteil des erfindungsgemässen Inliners an jeder Stirnseite 2 bis 10, besonders bevorzugt 2 bis 6 Positionierbohrungen auf.

Gemäss einer weiteren bevorzugten Ausführungsform der vorliegenden Erfindung weist der Inliner mindestens eine radiale Bohrung auf, welche durch die Dichthülse und das Innenteil in die Prozesszone führt. Auf diese Weise wird mindestens ein radialer Durchgangskanal ausgebildet, welcher ein Materialeinlass sein kann oder zur Anordnung eines Messgeräts verwendet werden kann.

Beispielsweise kann durch einen derart ausgebildeten Durchgangskanal Wasser oder ein Gas in das sich in der Prozesszone befindliche, zu extrudierende Material eingeleitet werden, um beispielsweise den Feuchtigkeitsgehalt des zu extrudierenden Materials einzustellen oder eine Porenbildung in dem zu extrudierenden Material zu erzeugen.

Der erfindungsgemässe Inliner ist hinsichtlich der Anzahl und Position dieser radialen Bohrungen nicht besonders eingeschränkt. Beispielsweise können 2 bis 10, bevorzugt 3-6 radiale Bohrungen parallel oder versetzt zueinander bereitgestellt sein. Der Durchmesser einer radialen Bohrung liegt bevorzugt im Bereich von 1 mm bis 5 cm.

Der erfindungsgemässe Inliner ist wie vorstehend beschrieben in einem Barrel angeordnet. Die vorliegende Erfindung betrifft daher auch ein Barrel für einen Extruder, umfassend ein Aussengehäuse und eine Durchgangsbohrung, dadurch gekennzeichnet, dass in der Durchgangsbohrung ein Inliner gemäss der vorliegenden Erfindung austauschbar angeordnet ist.

Gemäss der vorliegenden Erfindung kann ein herkömmlich für Extruder eingesetztes Barrel verwendet werden. Das Barrel kann eine viereckige oder zylindrische Form haben, wobei eine zylindrische Form bevorzugt ist. Das Barrel ist aus einem Material gefertigt, welches herkömmlich für Barrel von Extrudern verwendet wird. Vorzugsweise ist das Barrel aus einem Metall oder einer Metall-Legierung gefertigt. Beispielsweise seien Eisen, Stahl oder Legierungen genannt, welche Aluminium, Chrom, Molybdän oder Kombinationen dieser Metalle enthalten.

Am Ende des Barrels können Bauteile wie Flansche angeordnet sein, welche vorzugsweise zur stirnseitigen Verbindung von Barrels dienen. Hierzu können beispielsweise in diesen Bauteilen, vorzugsweise Flanschen, Positionierbohrungen bereitgestellt sein, in denen Befestigungselemente wie Schrauben oder Stifte angeordnet werden können. Vorzugsweise weist jedes Bauteil, vorzugsweise jeder Flansch, des erfindungsgemässen Barrels 2 bis 20, besonders bevorzugt 2 bis 16 Positionierbohrungen auf.

Gemäss der vorliegenden Erfindung werden somit vorzugsweise sowohl die Inliner (vorzugsweise über ihre Innenteile) als auch die Barrels (über Bauteile wie Flansche) miteinander verbunden.

Das Barrel weist eine Durchgangsbohrung auf. Die Durchgangsbohrung durchläuft das Barrel axial durch dessen gesamte Länge. In dieser Durchgangsbohrung ist ein Inliner gemäss der vorliegenden Erfindung austauschbar angeordnet. Dies kann wie vorstehend bereits beschrieben dadurch erreicht werden, dass der Aussendurchmesser der Dichthülse des Inliners geringfügig (vorzugsweise 0,01 bis 0,5%) kleiner ist als der Durchmesser der Durchgangsbohrung des Barrels und somit die Dichthülse etwas "Spiel" in der Durchgangsbohrung des Barrels hat.

Das Barrel hat vorzugsweise eine Länge, welche der Länge des erfindungsgemässen Inliners entspricht. Mit anderen Worten schliessen die Ende des Inliners bündig mit den Ende des Barrels ab, wenn der Inliner im Barrel angeordnet ist. Es ist aber gemäss einer anderen bevorzugten Ausführungsform der vorliegenden Erfindung auch möglich, dass die axiale Länge der Barrels die axiale Länge der Inliner unterschreitet, so dass nur die Inliner aneinander anschliessend ohne Zwischenraum zwischen den Inlinern miteinander verbunden sind, während zwischen zwei aufeinander folgenden Barrels ein kleiner Spalt von vorzugsweise 0,1 mm bis 6 mm ausgebildet ist.

Gemäss einer weiteren bevorzugten Ausführungsform der vorliegenden Erfindung weist das Barrel mindestens eine radiale Bohrung auf, welche mit der vorstehend beschriebenen radialen Bohrung des Inliners einen radialen Durchgangskanal bildet.

Auf diese Weise wird mindestens ein radialer Durchgangskanal ausgebildet, welcher ein Materialeinlass sein kann oder zur Anordnung eines Messgeräts verwendet werden kann.

Beispielsweise kann durch einen derart ausgebildeten Durchgangskanal Wasser oder ein Gas in das sich in der Prozesszone befindliche, zu extrudierende Material eingeleitet werden, um beispielsweise den Feuchtigkeitsgehalt des zu extrudierenden Materials einzustellen oder eine Porenbildung in dem zu extrudierenden Material zu erzeugen.

Alternativ kann in einem derart ausgebildeten Durchgangskanal ein Messgerät angeordnet sein, beispielsweise zur Bestimmung des Drucks oder der Temperatur in der Prozesszone des Inliners. Derartige Messgeräte sind bekannt und müssen nicht näher erläutert werden.

Das erfindungsgemässe Barrel ist hinsichtlich der Anzahl und Position dieser radialen Bohrungen nicht besonders eingeschränkt. Beispielsweise können 2 bis 10, bevorzugt 3-6 radiale Bohrungen parallel oder versetzt zueinander bereitgestellt sein. Der Durchmesser einer radialen Bohrung liegt bevorzugt im Bereich von 1 mm bis 5 cm.

Das vorstehend beschriebene Barrel kann in jedem herkömmlichen Extruder eingesetzt werden. Die vorliegende Erfindung betrifft daher auch einen Extruder, umfassend mindestens ein vorstehend beschriebenes Barrel.

Erfindungsgemäss umfasst der Extruder 2 bis 20 Barrel, vorzugsweise 2 bis 15 Barrels. Die Barrel sind wie vorstehend beschrieben vorzugsweise stirnseitig miteinander verbunden. Gemäss einer bevorzugten Ausführungsform der vorliegenden Erfindung sind zusätzlich die in den Barrels angeordneten Inliner stirnseitig miteinander verbunden, wie vorstehend beschrieben.

Extruder sind hinlänglich bekannt. Es wird z.B. auf die WO 2012/158023 A1 oder auf die Extruder, insbesondere Doppelschneckenextruder, von Bühler verwiesen. Solche Extruder haben vorzugsweise ein L/D-Verhältnis (Gesamtlänge zu Schneckendurchmesser) im Bereich von 12 -60, vorzugsweise 20 bis 40. Erfindungsgemäß werden die Extruder vorzugsweise mit 100 bis 1000 U/min, besonders bevorzugt mit 200 bis 800 U/min und besonders bevorzugt mit 20 bis 400 U/min betrieben.

Ein geeigneter Extruder umfasst mindestens eine Einheit zum Einbringen von Rohstoffen in einen ersten Abschnitt des Extruders. Sollen unterschiedliche Rohstoffe in den Extruder eingebracht werden, können auch mehrere solcher Einheiten vorgesehen sein. Der Extruder verfügt typischerweise auch über eine Wasser-, eine Öl- und gegebenenfalls eine Dampfzufuhrleitung.

Das Gehäuse des Extruders ist vorzugsweise temperaturgesteuert. Das zu extrudierende Material wird unter Druck (üblicherweise 1 bis 400 bar, vorzugsweise 1 bis 200 bar) geknetet, um eine homogene Mischung zu bilden. Dabei wird in der Regel ein Energieaufwand von 10 bis 160 Wh/kg, vorzugsweise 10 bis 130 Wh/kg betrieben.

Gemäß einer bevorzugten Ausführungsform der vorliegenden Erfindung kann am Ausgang des Extruders ein Kühlwerkzeug wie eine Kühldüse vorgesehen sein. Kühlwerkzeuge für Extruder sind hinreichend bekannt. Zwischen Extruder und Kühlwerkzeug kann vorzugsweise eine bekannte Verteilereinheit angeordnet sein.

Die vorliegende Erfindung wird nachfolgend anhand von nicht einschränkenden Ausführungsbeispielen unter Bezugnahme auf Figuren näher beschrieben. In den Figuren bezeichnen gleiche Bezugszeichen gleiche Elemente. Es zeigen:
- Fig. 1: eine schematische Ansicht einer Ausführungsform des erfindungsgemässen Inliners
- Fig. 2: eine schematische Ansicht der separaten Komponenten einer Ausführungsform des erfindungsgemässen Inliners
- Fig. 3: eine schematische Ansicht einer Ausführungsform des erfindungsgemässen Barrels
- Fig. 4: eine schematische Ansicht einer Ausführungsform des erfindungsgemässen Extruders

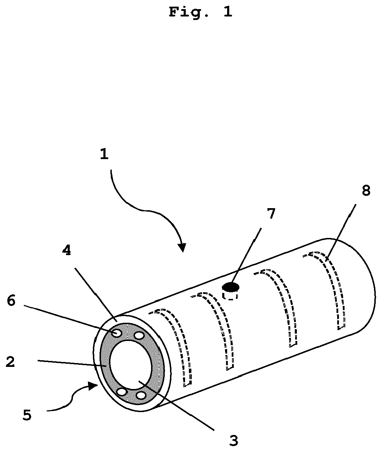

In Fig. 1 ist eine schematische Ansicht einer Ausführungsform des erfindungsgemässen Inliners 1 gezeigt. Der Inliner 1 umfasst ein Innenteil 2 mit einer axial durch das Innenteil führenden Prozesszone 3, sowie eine das Innenteil 2 vollständig umfänglich umgebende Dichthülse 4. Innenteil 2 und Dichthülse 4 sind in dieser Ausführungsform zylindrisch und aus einem Metall oder einer Metall-Legierung gefertigt. Die axial die gesamte Länge des Inliners 1 durchlaufende Prozesszone 3 ist in dieser Ausführungsform ebenfalls zylindrisch und ist für einen Einwellenextruder vorgesehen. Es können aber auch andere Prozesszonen bereitgestellt werden, wie vorstehend beschrieben. An den Stirnseiten 5 des Innenteils 2 sind Positionierbohrungen 6 vorgesehen, um mehrere Inliner 1 miteinander zu verbinden. Der Inliner 1 weist zudem eine radiale Bohrung 7 auf, welche in die Prozesszone 3 mündet.

Das Innenteil 2 und die Dichthülse 4 sind Gussteile. Die Dichthülse 4 ist auf das Innenteil 2 aufgeschrumpft. Es ist zu erkennen, dass in der Oberfläche des Innenteils 2 unterhalb der Dichthülse 4 ein rinnenförmiger (gestrichelt dargestellter) Kühlkanal 8 angeordnet ist, der die Oberfläche des Innenteils 2 spiralförmig durchläuft und nach aussen durch die Dichthülse 4 abgeschlossen ist.

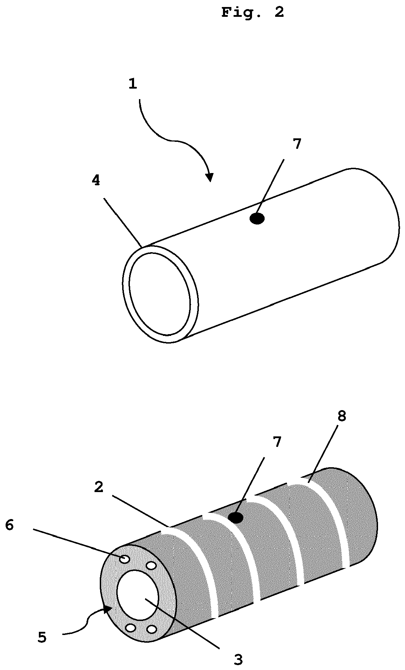

In Fig. 2 ist eine schematische Ansicht der separaten Komponenten einer Ausführungsform des erfindungsgemässen Inliners 1 gezeigt.

Es ist zu erkennen, dass in der Oberfläche des Innenteils 2 ein rinnenförmiger Kühlkanal 8 angeordnet ist, der die Oberfläche des Innenteils 2 spiralförmig durchläuft und nach aussen offen ist. Der Kühlkanal 8 wird durch die Dichthülse 4 verschlossen, wenn die Dichthülse 4 auf das Innenteil 2 aufgebracht ist.

Die radiale Bohrung 7 ist sowohl im Innenteil 2 als auch in der Dichthülse 4 vorhanden und mündet in die Prozesszone 3.

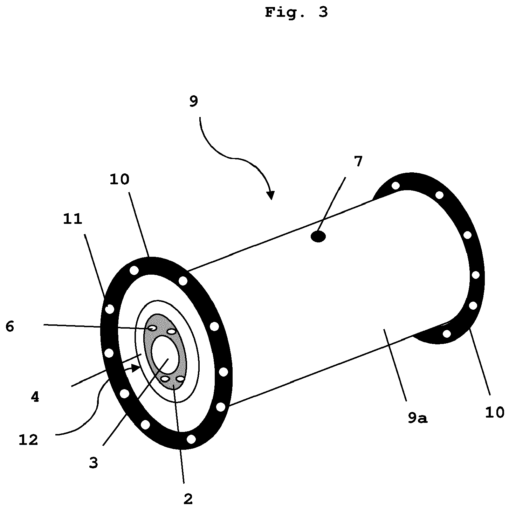

In Fig. 3 ist eine schematische Ansicht einer Ausführungsform des erfindungsgemässen Barrels 9 gezeigt. Das Barrel 9 hat ein Aussengehäuse 9a und weist an beiden Enden je einen Flansch 10 auf, in welchem Positionierbohrungen 11 bereitgestellt sind, um mehrere Barrel 9 stirnseitig miteinander zu verbinden.

Das Barrel 9 ist in dieser Ausführungsform zylindrisch und aus einem Metall oder einer Metall-Legierung gefertigt.

In der Durchgangsbohrung 12 des Barrels 9 ist ein Inliner 1 gemäss Fig. 1 angeordnet.

Die radiale Bohrung 7 ist auch im Barrel 9 bereitgestellt, führt durch das Innenteil 2 und die Dichthülse 4 und mündet in die Prozesszone 3.

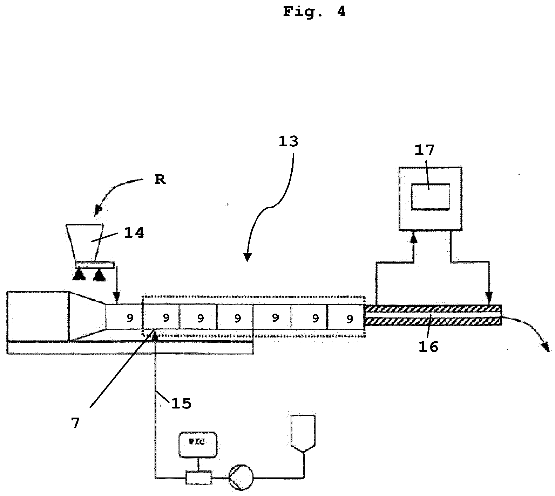

Fig. 4 ist eine schematische Ansicht einer Ausführungsform des erfindungsgemässen Extruders 13. Der Extruder 13 umfasst mehrere Barrels 9. Ein Rohstoff R kann über die Dosiereinheit 14 zugeführt werden. Über eine Zuführung 15 kann Wasser oder Dampf hin den Extruder 13 eingeleitet werden, vorzugsweise durch einen radialen Durchgangskanal, der durch eine radiale Bohrung 7 in einem Barrel 9 ausgebildet ist. In der Ausführungsform gemäss Fig. 1 ist ein Kühlwerkzeug 16 am Ende des Extruder 13 angeordnet. Selbstverständlich können auch andere herkömmliche Komponenten am Ende des Extruders angeordnet sein. Beispielhaft seien ein Schneidapparat oder eine Endplatte mit anschliessendem Schneidapparat genannt. Das Kühlmedium wird bevorzugt aus einem Tank 17 an der stromabwärtigen Seite des Kühlwerkzeugs 16 zugeführt und an der stromaufwärtigen Seite des Kühlwerkzeugs 16 abgeführt. Die Strömungsrichtung des Kühlmediums ist somit der Fliessrichtung des Extrudats entgegengesetzt.

## Patentansprüche

1. Inliner (1) für einen Extruder (13), umfassend ein Innenteil (2) mit einer axial durch das Innenteil (2) führenden Prozesszone (3), sowie eine das Innenteil (2) vollständig umfänglich umgebende Dichthülse (4), **dadurch gekennzeichnet, dass** das Innenteil (2) mindestens einen Kühlkanal (8) aufweist.

2. Inliner (1) nach Anspruch 1, **dadurch gekennzeichnet, dass** der mindestens eine Kühlkanal (8) in der Oberfläche des Innenteils (2) angeordnet ist.

3. Inliner (1) nach Anspruch 2, **dadurch gekennzeichnet, dass** der mindestens eine Kühlkanal (8) in Form einer Kühlspirale in der Oberfläche des Innenteils (2) angeordnet ist.

4. Inliner (1) nach einem der Ansprüche 1 bis 3, **dadurch gekennzeichnet, dass** das Innenteil (2) ein Gussstück aus Metall ist.

5. Inliner (1) nach einem der Ansprüche 1 bis 4, **dadurch gekennzeichnet, dass** die Dichthülse (4) fest auf dem Innenteil (2) aufgebracht ist.

6. Inliner (1) nach Anspruch 5, **dadurch gekennzeichnet, dass** die Dichthülse (4) auf das Innenteil (2) aufgeschrumpft und optional aufgelötet oder aufgeschweisst ist.

7. Inliner (1) nach einem der Ansprüche 1 bis 6, **dadurch gekennzeichnet, dass** die Prozesszone (3) ausgewählt ist aus der Gruppe bestehend aus einer zylindrischen Prozesszone und zwei teilweise überlappenden zylindrischen Prozesszonen.

8. Inliner (1) nach einem der Ansprüche 1 bis 7, **dadurch gekennzeichnet, dass** der Inliner (1) mindestens eine radiale Bohrung (7) aufweist, welche durch die Dichthülse (4) und das Innenteil (2) in die Prozesszone (3) führt.

9. Barrel (9) für einen Extruder (13), umfassend ein Aussengehäuse (9a) und eine Durchgangsbohrung (12), **dadurch gekennzeichnet, dass** in der Durchgangsbohrung (12) ein Inliner (1) gemäss einem der Ansprüche 1 bis 8 austauschbar angeordnet ist.

10. Barrel (9) nach Anspruch 9, **dadurch gekennzeichnet, dass** das Barrel (9) mindestens eine radiale Bohrung (7) aufweist, welche mit der radialen Bohrung (9) des Inliners (1) einen radialen Durchgangskanal bildet.

11. Barrel (9) nach Anspruch 10, **dadurch gekennzeichnet, dass** der mindestens eine radiale Durchgangskanal ein Materialeinlass ist oder in dem radialen Durchgangskanal ein Messgerät angeordnet ist.

12. Extruder (13), umfassend mindestens ein Barrel (9) gemäss einem der Ansprüche 9 bis 11.

13. Extruder (13) nach Anspruch 12, **dadurch gekennzeichnet, dass** der Extruder (13) 2 bis 20 Barrel (9) umfasst, wobei die Barrel (9) stirnseitig miteinander verbunden sind.

14. Extruder (13) nach Anspruch 13, **dadurch gekennzeichnet, dass** zusätzlich die in den Barrels (9) angeordneten Inliner (1) stirnseitig miteinander verbunden sind.

15. Extruder (13) nach einem der Ansprüche 12 bis 14, **dadurch gekennzeichnet, dass** der Extruder (13) ausgewählt aus der Gruppe bestehend aus einem Einwellenextruder und einem Zweiwellenextruder, wobei die Extruderschnecke(n) in der Prozesszone (3) des oder der Inliner(s) (1) angeordnet ist/sind.
